# EUROPEAN PATENT SPECIFICATION

(11) **EP 1 031 061 B1**
(45) Date of publication and mention of the grant of the patent: **23.01.2002**
(21) Application number: 98955899.4
(22) Date of filing: 11.11.1998
(51) Int. Cl.: G02C 3/00, G02C 5/20

(54) **DEVICE FOR CONTAINING AND RELEASING THE SPECTACLE CORD ON THE ARMS OF THE FRAME**
ANORDNUNG FÜR DAS ENTHALTEN UND FREISETZEN EINER BRILLENSCHNUR AUF DEN BÜGELN
DISPOSITIF SERVANT A LOGER UN CORDON A LUNETTES DANS LES BRANCHES DE LA MONTURE ET A LIBERER LEDIT CORDON DESDITES BRANCHES

(30) Priority: 13.11.1997 IT PI970070
(43) Date of publication of application: 30.08.2000
(73) Proprietor: Conti, Giuseppe, 50144 Firenze (IT)
(72) Inventor: Conti, Giuseppe, 50144 Firenze (IT)
(74) Representative: Turini, Laura
(86) International application number: IT9800316
(87) International publication number: WO9926105

(56) References cited:
- EP-A- 0 058 772
- DE-C- 492 912
- DE-U- 9 420 185
- FR-A- 2 241 225
- US-A- 4 012 130
- US-A- 5 373 331

## Description

### Technical Field

This invention concerns the technical sector relating to spectacles and accessories for spectacles.

In the following description by the term "cord" is meant a long thin body made of cord, chain, string, elastic or other material, used to hang the spectacles around the neck, holding them by the end of the arms.

In particular, the invention concerns a device which can be applied to or built into the arms of the frame, in which the cord is contained and from which it is extracted each time the wearer wishes to drop the spectacles on his chest holding them by the cord which passes around his neck, and into which it re-enters when needed.

### Background art

Technicians in the field are well acquainted with the cords which are applied to the ends of the frame arms and which allow the wearers to take off their spectacles without needing to worry about losing them, as they always remain hanging around their necks like a necklace.

It is thanks to these cords that when the wearer takes off his spectacles, instead of placing them on a table, they remain hanging around his neck by the cord which passes around the neck and which holds the spectacles due to the fact that it is attached to the two ends of the arms.

Until today, most of the spectacle cords are accessories which are entirely separate from the arms and have the disadvantage of being inconvenient to use. In the first place, you need to have them with you and apply them to the frame from which they are a separate part; secondly when the spectacles are put away or put on, the cord is a nuisance, it becomes knotted and it is difficult to put away with the spectacles folded.

At present, the wearer proceeds to wrap the cord around the closed frame, but does not always act with precision, owing to haste, and often when coming to use the spectacles again, they are found to be wrapped in muddled knots that are difficult to undo.

Documents EP 0058 772A and US 5 373 371A disclose devices that hold the spectacle cord or that can contain it in a small space, and that can be applied to or built into the spectacle arms.

The main aim of this invention is to eliminate the inconveniences mentioned above and to supply a device that is built in or applied onto the arms, which contains the spectacle cord and which enables the cord to be released and re-inserted simply and rapidly into the container on the device, thus avoiding trouble to the wearer when he puts away his spectacles.

The advantages of this invention are essentially that the cord disappears into the device when the spectacles are not worn around the neck, without becoming muddled or creating annoyance; that it is not necessary to remember to take the cord with you as it is always on the spectacles, even if it cannot be perceived; that besides holding the glasses around the neck, it keeps them firmly on the head when they are worn; that it is quite invisible externally.

### Disclosure of invention

This result has been achieved with an invention, a device made up of two elements to apply to or build into each of the frame arms provided with an internal groove which contains the cord. When the wearer wishes to wear the spectacles around his neck, he only has to extract the cord from the device on the arms to its entire length; when the spectacles are put away or worn, the cord is returned into the elements described above, leaving a length of cord outside equal to the distance between the two arms.

The characteristics of this invention are defined in the independent claim. Other characteristics of this invention are the subject of subordinate claims.

Reducing it to its essential structure and with reference to the enclosed drawings, a device for containing the spectacle cord, characterised by the fact that it is built in, or applied to the arms of the frame, in conformity with this invention, is made up of:
- A means of containing the cord on the spectacle arms, with a space made inside the arms or two elements (10) to be applied to each of the arms, made up of a slide guide or groove (6, 6A, 16), inside which the cord is contained (12, 2, 18) when not in use;
- A means of allowing the cord to come out (12), with an opening (14) on one side of the elements described above (10) or on the end of the arm, through which the cord passes and comes out when it is pulled.
- A means of stopping the cord once it has been pulled out, with a slot, a groove, a lock or similar (9, 17), which blocks the cord, stopping it from returning to its container;
- A means of returning the cord to its container when it is no longer needed, with elastic (2), a spring or some other means (17) that immediately draws back the cord once it has been freed by the lock (9, 17) which blocked it.

It is an advantage that, even when it is inside the container, the cord (12) projects from the arms to a length equal to the distance between the two open arms, which enables the wearer to put the spectacles on without difficulty, or to fold the arms easily, without entwining the cord. Moreover, the projecting cord can also help keep the spectacles firmly on the head and stop them from accidentally falling.

It is an advantage that it is a single cord (12) which has two pieces of elastic at each end (2) each situated inside each slide guide on the two frame arms.

It is an advantage that one part of the spectacle cord is made of (12) cord, thin chain or other suitable material which is connected to a second length of elastic (2) fixed at a point (13) at the end of the slide guide, so that in order to make the cord come out, it only has to be pulled until the elastic becomes taut, and kept so while blocking the cord on the device inside the groove (9) or by another means.

It is an advantage that when the wearer wishes to make the cord (12) go back inside the device, he only has to unhook the cord from the point at which it is locked (9), so that it is drawn back into the slide guide by the pull of the elastic (2) and becomes shorter.

It is an advantage that the device has a slide guide (6-6A) that is double with respect to its length as both parts of the slide guide (6), (6A) are separated by a dividing element (8) or are themselves made up of two cylindrical tubes having an empty (8) rather than a filled space between them.

It is an advantage that the cord runs on a small wheel (3) that is applied at the bend of the slide guide (6-6A).

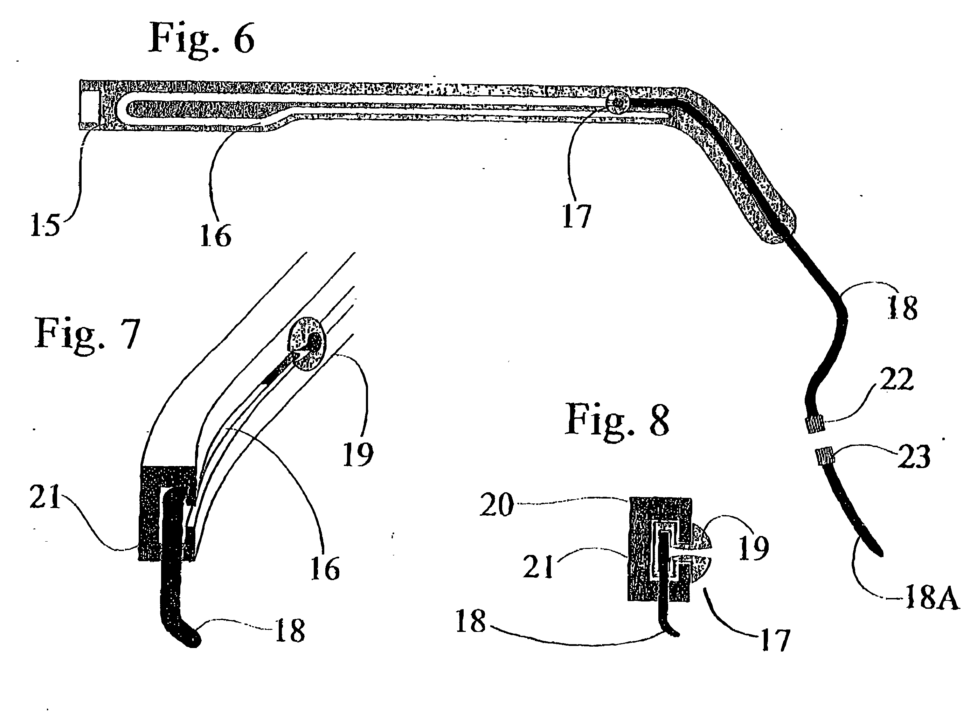

It is an advantage that in a different model and with reference to fig. 6, the cord is connected to an element (17), which is inserted by pressure into the single slide guide (16) externally visible, so that when the cord has to be drawn into the device, it is merely necessary to pull the element (17) and until it arrives at the internal locking point. When the cord has to be used, the wearer only has to move the element (17) to the opposite end of the arm.

It is an advantage that the element (17) is made up of a projecting part (19) open at the centre, so that on being inserted into the slide guide, it can be pressed lightly and then released, once it has entered the slide guide itself, which it cannot come out of.

It is an advantage that the cord can be a single piece or made up of two pieces (18) (18A) which are separable, and interchangeable using suitable slots(22) (23).

It is an advantage that the device can be used both to keep the spectacles hanging round the wearer's neck and to keep them firmly on his head when being worn, stopping them from slipping down his nose. In the second case, once the spectacles have been put on, the wearer needs only let the cord out and then release it so that the elastic keeps it taut, or by taking the knob (19) of the element (17) to the desired point to obtain the desired pressure.

It is an advantage that the device can be applied or incorporated into the arm with any method, by glueing, moulding, embedding, by means of a hook and other methods that are suitable for joining each part reversibly.

### Brief description of drawings

The attached drawings are practical examples of the invention, but are not to be considered restrictive.

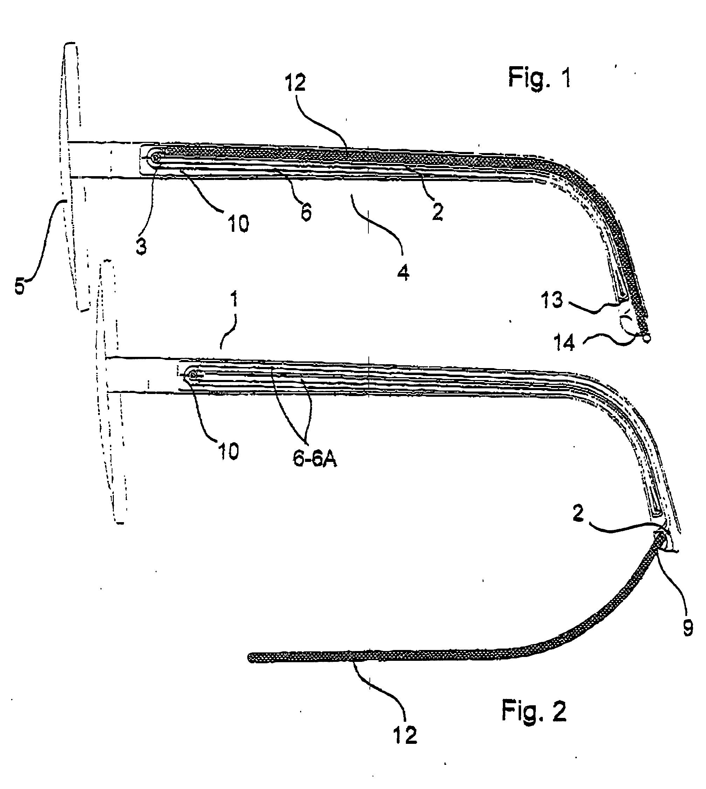

- Fig. 1 shows the diagram of the side of the spectacle frame with an element of the device (10) applied to or built into the arm (4), seen in cross-section and in which a groove (6) has been made in which the first piece of elastic cord (2) is inserted and fixed inside the device at a certain point (13), and the second part of the cord (12) made of cord or some other material, which is the part which comes out of the device through the opening (14) on the device or the arm. On the bend in the groove, there is a small wheel (3) which facilitates the passage of the cord; the lens (5) is also visible in the diagram;
- Fig. 2 again shows the diagram of the side of the spectacle frame (1) with the element (10) in which it is possible to see the slide guides (6-6A) and the cord (12) and the elastic (2) running along them, in this case held taut by the cord being drawn out, which stops in a groove (9) which blocks it;

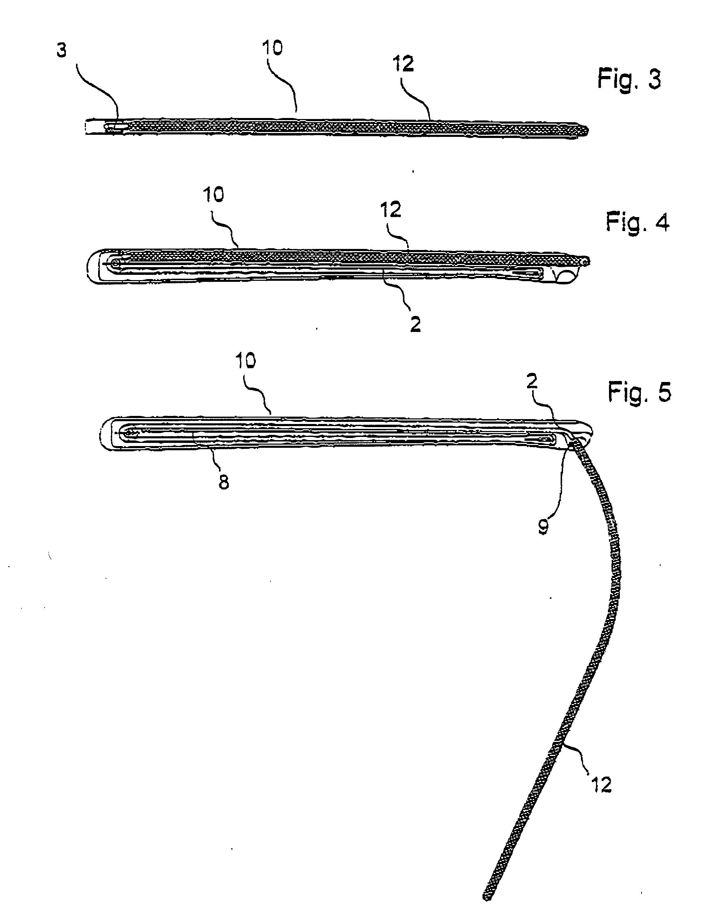

- Fig. 3 is a diagram showing an overhead view of the device (10) in cross section in which the cord (12) can be seen running around the wheel (3);
- Fig. 4 is a diagram in profile of the device (10) highlighting the cord (12) and the elastic (2) inside;
- Fig. 5 is a diagram of the device (10) with the elastic taut (2) and the cord (12) blocked in the slot (9), while the dividing element (8) between the two superimposed slide guides is visible.
- Fig. 6 shows a different system for building the device in which the element containing the cord, whether it be applied to or built into the arm, (15) is provided with a slide guide (16) that is visible from the exterior and inside which there is a moving element (17) attached to the cord (18) which in this case is supplied with slots (22) (23) connecting it to the remaining part of the cord (18A);
- Fig. 7 shows an enlarged axonometric projection of one part of the element in Fig. 6, highlighting the slide guide (16), the projecting part (19) of the element (17) and the section (21) from which the cord comes out (18);
- Fig. 8 shows a cross section of the device (21) highlighting the element (17) made up of a projecting part (19) and of an internal part (20), inside which the cord is fixed (18).

In practice, the details of execution can vary in accordance with the shape, size, position of the elements, type of materials used, without however, straying from the principle of the solution adopted and therefore remaining inside the boundaries of the claims.

## Claims

1. Device for storing a spectacle cord comprising: containing means built into or applied to the arms of the frame, which includes
- a hollow space inside the frame arms or within two elements (10) each applied to an associated arm, said space being formed by a slide guide or groove (6, 6A, 16), inside which the cord is contained (12, 2, 18) when not in use;
- means for allowing the cord (12) to be pulled out of a hole (14) provided on one side of the above mentioned elements (10) or on the end of the frame arm.
- means for blocking movement of the cord, once it has been pulled out, by means of a slot, a groove, or a lock (9, 17), so as to prevent the cord from returning inside its containing means;
- means for retracting the cord into its containing means, when it is no longer needed, with an elastic (2), or a spring means (17) which immediately draws back the cord once it has been released from the blocking means (9, 17).

2. The device described in claim 1 wherein, when not in use, the cord (12) projects from the arms for a length roughly equal to the distance between the two open arms so that the wearer can put them on without difficulty and can easily close the arms, one on top of the other, without the cord becoming entwined, and wherein the projecting cord may also be used for holding the spectacles on the wearer's head more firmly and preventing them from accidentally falling;

3. The device described in claim 2 wherein the spectacle cord is made up of an initial single piece (12) made of cord, thin chain or other suitable material, and of a second piece made of elastic (2) fixed at a point (13) at the end of the slide guide, so that to draw out the cord (12) it merely needs to be pulled until the elastic (2) is taut and kept so as to lock the cord on the device inside the slide guide (9) or in another manner;

4. The device described in claim 2 wherein the blocking means are adapted such that when the wearer wishes to return the cord inside the device, he merely has to release the cord (12) from the point where it is locked (9), so that it is drawn back into the slide guide by the pull of the elastic (2), thereby becoming shorter.

5. The device described in claim 2 wherein the slide guide is an internal slide guide (6-6A) that is not externally visible, doubled over on itself with respect to its length with the two parts of the slide guide being separated from each other by a dividing element (8) or the two parts of the slide guide being formed by two cylindrical tubes

6. The device described in claim 2 wherein at a bend in the slide guide (6-6A) a small wheel or similar is applied on which the cord runs;

7. The device described in claim 1 wherein the cord can be composed of a single piece or of two parts (18) (18A) which can be separated from each other and are interchangeable by means of special slots (22) (23);

8. The device described in claim 1 wherein the cord can be connected to an element (17) which is inserted by pressure, into an externally visible slide guide (16), so that when the cord has to be drawn back into the device, the wearer merely has to press and pull the element (17) through its projecting part (19) and take it to an internal locking point, while when the cord has to be used, the wearer needs only move the above mentioned element (17) to the opposite end of the arm;

9. The device described in claim 8 wherein the element (17) is made up of a projecting part (19) open at the centre, so that when it is being inserted into the slide guide, it can be lightly pressed and then released once inserted into the slide guide itself, from which it cannot come out;

10. The device described in claim 1 wherein the device can be built in the arm or be applied to it by glueing, moulding, embedding, by means of a hook or any other method suitable for joining each part in a reversible manner.

## Patentansprüche

1. Vorrichtung um Enthaltung eines Brillendrahtes, der eingebaut oder eingesetzt zur Bügel des Gestells Mittel ist, enthalt und einschließt:
- ein leere Raum innnerhalb der Bügel des Gestells oder binnen zwei Elemente (10), die beide zum einen vereigneten Bügel eingesetzt sind. Der betreffende Raum besteht aus einer gleitenden Führung oder Nut (6, 6A, 16) und innerhalb der selben ist den in der Ruhephase Draht enthalt (12, 2, 18);
- Mittel um den Austritt des Drahtes (12) aus einer Öffnung (14), die auf einer Seite der o.g. Elemente (10) oder auf die ausgehende Seite der Gestellsbügel zu finden ist;
- Mittel um die Blockierung des Drahtes nach dem Abziehen aus der Vorrichtung durch einen Einschnitt, eine Nute oder ein Halter (9, 17). Das dienst zum Verhinderung der Drahtesrückkehr innerhalb seiner enthaltenden Mittel;
- Mittel um das Einlaufen des Drahtes innerhalb seiner enthaltenden Mittel, wenn es nicht mehr benutzt werden muß, mit einem Gummiband oder Feder (17), die sofort den Draht wiederzieht, wenn es aus der Blockierungsmittel (9, 17) wiedergelaßt wird.

2. Die am Ansprüch 1. beschriebenen Vorrichtung ist wie folgend charackterisiert: der nicht in Benutzung Draht (12) projiziert sich von der Bügel für eine Länge, die ungefähr gleich zum Abstand zwischen die zwei geöffneten Bügel ist, so daß der Träger ohne Schwierigkeiten sie anhaben kann und kann leicht die eine oben auf der andere Bügel zuklappen, ohne den Draht zu entflechten. Außerdem kann der projiezierende Draht für eine festere Erhaltung der Brillen auf den Trägerskopf und für die Verhütung der zufälligen Fälle benutzt werden;

3. Die am Anspruch 2 beschriebenen Vorrichtung ist wie folgend charackterisiert: der Brillendraht besteht aus einem anfänglichen einzigen Teil (12) aus Draht, dünner Kette oder anderem passenden Material und aus einem zweiten Teil aus Gummiband (2), das aus einem Punkt (13) am Ende der gleitend Führung gefestigt wird. Auf dieser Weise, um den Draht (12) zu enveitem, muß man den Draht (2) nur bis zur Gespanntheit des Gummibandes ziehen und das halten, so daß es auf die Vorrichtung innerhalb der gleitenden Führung (9) oder auf einer anderen Weise geschlossen wird.

4. Die am Anspruch 2. beschriebenen Vorrichtung ist wie folgend charackterisiert: die Blockierungsmittel sind vorbereitet, so daß als der Träger den Draht innerhalb der Vorrichtung zurückziehen will, muß er den Draht (12) nur aus dem Punkt der Schließung (9) entspannen. Auf dieser Weise ist es bis zur gleitenden Führung durch die Zugstange des Gummibandes (2) zurückgezogen und wird wegen diese Gründe kürzer.

5. Die am Anspruch 2. beschriebenen Vorrichtung ist wie folgend charackterisiert: die gleitenden Führung ist eine innere äußerlich unsichtbare gleitende Führung (6-6A). Sie ist auf sich selbst in Bezug auf seine Länge zusammengefaltet, mit der zwei Teilen der gleitenden Führung, die ein anderer beim einen Trennelemente gesondert sind oder aus zwei walzenförmiger Röhre bestehen;

6. Die am Ansprüch 2. beschriebenen Vorrichtung ist wie folgend charackterisiert: ein kleines Rad oder etwas Änliches ist auf ein Band in der gleitenden Führung (6-6A) eingesetzt. Der Draht fließt auf diesen Rad;

7. Die am Anspruch 1. beschriebenen Vorrichtung ist wie folgend charackterisiert: der Draht kann auf einem einzigen Teil oder zwei Teilen (16) (18A) bestehen, die ein ander gesondert werden können und sie sind durch besondere Nutten (22) (23) auswechselbar;

8. Die am Anspruch 1. beschriebenen Vorrichtung ist wie folgend charackterisiert: der Draht kann mit einem Element (17) im Zusammenhang gebracht werden, das ins eine äµßerlich unsichtbare gleitende Führung (16) beim Druck gesteckt ist. Auf dieser Weise, wenn den Draht innerhalb der Vorrichtung zurückgezogen man muß, muß der Träger einfach das Element (17) durch sein werfende Element (19) sowie drucken und ziehen als auch zum einen inneren Sperrpunkt bringen. Wenn man den Draht mittlerweile benutzt werden muß, muß der Träger nur das o.g. Element (17) zum gegenüberliegend Rand des Bügels umstellen;

9. Die am Ansprüch 6, beschriebenen Vorrichtung ist wie folgend charackterisiert: das Element (17) besteht aus einem im Mittelpunkt geöffneten werfenden Teil (19), so daß wenn es innerhalb der gleitenden Führung gesteckt wird, kann es leicht gedrückt werden. Dann kann es wiederverlassen werden, wenn es innerhalb der selben gleitenden Führung gesteckt wird, aus dem es nicht austreten kann;

10. Die am Ansprüch 1. beschriebenen Vorrichtung kann in der Bügel gebildet oder zur ihr beim Ankleben, Schmelzung, Befestigung oder beim Haken oder jedem anderen Verfahren eingesetzt werden, das für die Verbindung jedes Teiles auf einer umkehrbaren Weise geeignet ist.

## Revendications

1. Un dispositif pour contenir le fil qui soutien les lunettes, comprenant des moyens contenants intégrés ou attachés aux branches de la monture, qui comprennent:
- une cavité dans les branches de la monture ou dans deux éléments (10), chacun attaché à une branche associée, cette cavité étant formée par un coulisseau ou une rainure (6, 6A, 16) qui contient le fil (12, 2, 18) quand il n'est pas utilisé;
- des moyens pour que le fil (12) puisse sortir par une ouverture (14) pratiquée sur un côté des éléments (10) indiqués plus haut ou sur le bout de la branche de la monture;
- des moyens pour bloquer le mouvement du fil, après qu'il est sorti, par un emboîtement, une rainure ou une fermeture (9, 17), de manière qu'ils empêchent le fil de rentrer dans le moyens contenants;
- des moyens pour faire rentrer le fil dans le moyens contenants quand on n'en a plus besoin, par un élastique (2) ou un moyen à ressort (17) qui tire immédiatement le fil après qu'il a été relâché par les moyens bloquants.

2. Le dispositif selon la revendication 1, **caractérisé en ce que** le fil (12), quand il n'est pas utilisé, sort de la branche par une longueur à peu près égal à la distance entre les deux branches ouvertes, de façon que l'usager peut les mettre sans aucune difficulté et peut facilement fermer les branches, l'une sur l'autre, sans que le fil s'entortille, et **caractérisé en ce que** le fil en saillie peut être aussi utiliser pour porter les lunettes stables sur sa tête et les empêcher de tomber accidentellement.

3. Le dispositif selon la revendication 2 **caractérisé en ce que** le fil pour soutenir les lunettes est composé d'une pièce initiale simple (12) en corde, chaîne mince ou autre matériau approprié, et d'une seconde pièce en élastique (2) fixée sur un point (13) au bout du coulisseau, de façon que, afin d'extraire le fil (12), il faut le tirer au point que l'élastique (2) est tendu et tenu comme ça pour fixer le fil sur le dispositif dans le coulisseau (9) ou en d'autre manière.

4. Le dispositif selon la revendication 2, **caractérisé en ce que** les moyens bloquants sont arrangés de façon que, quand l'usager veut faire rentrer le fil dans le dispositif, il ne doit que relâcher le fil (12) du point où il a été fixé (9), ainsi qu'il rentre dans le coulisseau par le tire de l'élastique (2), devenant ainsi plus court.

5. Le dispositif selon la revendication 2, **caractérisé en ce que** le coulisseau est un coulisseau intérieur (6-6A) qui n'est pas visible extérieurement, doublé sur soi par rapport à sa longueur, avec les deux parties du coulisseau séparées l'une de l'autre par un élément divisant (8), ou les deux parties du coulisseau formées par deux tubes cylindriques.

6. Le dispositif selon la revendication 2, **caractérisé en ce que**, sur la courbe du coulisseau (6-6A), le fil roule sur une roulette ou similaire y attachée.

7. Le dispositif selon la revendication 1, **caractérisé en ce que** le fil peut être composé d'une pièce unique ou deux parties (18) (18A) qui peuvent être divisées l'une de l'autre et sont interchangeable par des emboîtement spéciales (22) (23).

8. Le dispositif selon la revendication 1, **caractérisé en ce que** le fil peut être joint à un élément (17) qui est inséré par pression dans un coulisseau (16) visible extérieurement, de façon que, quand le fil doit rentrer dans le dispositif, l'usager ne doit que presser et tirer l'élément (17) par sa saillie (19) et le mener à un point intérieur bloquant; au contraire quand le fil doit être utiliser l'usager ne doit que mouvoir l'élément indiqué plus haut (17) au bout opposé de la branche.

9. Le dispositif selon la revendication 8, **caractérisé en ce que** l'élément (17) est formé d'une saillie (19) ouverte au milieu, de façon qu'elle peut être pressée légèrement et puis relâchée afin d'être insérée dans le coulisseau d'où elle ne peut pas sortir.

10. Le dispositif selon la revendication 1, **caractérisé en ce que** ce dispositif peut être intégré à la branche ou attaché par collage, moulage, emboîtement, au moyen d'un crochet ou n'importe quelle autre méthode apte à joindre chaque partie dans une manière réversible.
